# EUROPÄISCHE PATENTANMELDUNG

(11) **EP 4 792 893 A1**
(43) Veröffentlichungstag der Anmeldung: **19.08.2026**
(21) Anmeldenummer: 25157695.5
(22) Anmeldetag: 13.02.2025
(51) Int. Cl.: A62C 99/00, A62C 3/16, G09B 19/24

(54) **BRANDSCHUTZÜBUNGSVORRICHTUNG ZUR SIMULATION EINES AKKUMULATORBRANDS**

(71) Anmelder: AISCO Firetrainer GmbH, 79232 March (DE)
(72) Erfinder: STREUBEL, Gunter, 79098 Freiburg (DE)
(74) Vertreter: Mertzlufft-Paufler, Cornelius

(57) **Zusammenfassung**

Zur Verbesserung der Möglichkeiten für realistische Brandschutzübungen wird eine neuartige Vorrichtung vorgeschlagen, die in Form einer Attrappe (4) eines mobilen elektronischen Geräts ausgestaltet ist und dabei in der Lage ist, eine autonom brennende Übungsflamme (2) über einen Übungszeitraum zu unterhalten, während ein Übender die Attrappe (4) im Raum umher trägt, um das Löschen eines Brands zu üben, so als sei das simulierte elektronische Gerät aufgrund eines Akkumulator-Brands im Innern in Brand geraten (Figur 1).

## Beschreibung

Die Erfindung betrifft eine wiederverwendbare Brandschutz-übungsvorrichtung sowie ein zugehöriges Verfahren und eine zugehörige spezifische Verwendung eines Brennstoffs.

Die Verbreitung von Lithium-Ionen-Akkumulatoren mit sehr hoher Energiedichte in elektronischen Geräten wie Smartphones, Tablets und Notebooks schreitet immer weiter voran. Dabei kommt es auch immer wieder zu Bränden dieser Akkumulatoren. Die Brandursache kann beispielsweise ein mechanischer Schlag sein, der eine elektrische Isolation am Akkumulator beschädigt, oder Alterungseffekte oder auch nur ein Ladevorgang mit einem falschen Ladegerät. Problematisch beim Brand eines solchen Akkumulators ist die aufgrund der hohen Energiedichte entstehende enorme Erhitzung des elektronischen Geräts, da der Brand auf einem chemischen Vorgang im Innern des Akkumulators beruht, der selbst ohne Zufuhr von Sauerstoff weiter voranschreiten kann und damit die Brandquelle aufrecht erhält. In der Folge kommt es oftmals zu einer enormen Hitzeentwicklung sowie zu einem Feststoffbrand des gesamten elektronischen Geräts, der sich oftmals mit herkömmlichen Löschmitteln wie Sprühwasser oder Löschschaum nur sehr schwer kontrollieren lässt.

Auch wenn ein solcher Akkumulator-Brand vergleichsweise selten auftritt, stellt dieses Brandszenario ein hochgefährliches dar, da gerade Laien oftmals damit überfordert sind, einen solchen Brand sachgemäß zu löschen. Besonders gefährlich kann es dabei werden, wenn ein solcher Brand in einer Flugzeugkabine oder in einer sonstigen durch Brand und/oder Rauch besonders gefährdeten Umgebung auftritt.

Das Eintauchen des gesamten brennenden elektronischen Geräts in ein Wasserbad und die damit einhergehende massive Kühlung des bereits brennenden Akkumulators ist aus fachlicher Sicht eine geeignete Maßnahme, um einen solchen Akkumulator-Brand unter Kontrolle zu bringen, da ein Löschen mit CO2-Schaum oder ein Ausblasen der brennenden Flamme oder ein Berieseln mit Wasser jeweils in der Regel nicht ausreichend ist, um die enorme Hitzeentwicklung zu unterdrücken.

Bislang gibt es aber keine geeigneten Trainingsmöglichkeiten, insbesondere für Laien, um das Löschen eines Akkumulator-Brands realistisch trainieren zu können.

Hiervon ausgehend hat es sich die Erfindung zur Aufgabe gemacht, verbesserte Brandschutzübungen, gerade für Laien, zu ermöglichen und dabei stets die Sicherheit der Übenden zu gewährleisten.

Zur Lösung dieser Aufgabe wird eine wiederverwendbare Brandschutzübungsvorrichtung gemäß Anspruch 1 vorgeschlagen. Diese Brandschutzübungsvorrichtung ist zum Erzeugen einer realen Übungsflamme eingerichtet, wobei die Übungsflamme einen Akkumulator-Brand simulieren soll, der innerhalb eines mobilen elektronischen Geräts auftritt. Die Übungsflamme soll dabei im Rahmen einer realen Feuerlöschübung erzeugt werden, sodass der mit der Brandschutzübungsvorrichtung Übende in die Lage versetzt wird, einen solchen Akkumulator-Brand sachgemäß zu löschen. Zu diesem Zweck umfasst die Brandschutzübungsvorrichtung erfindungsgemäß eine Attrappe des besagten mobilen elektronischen Geräts beziehungsweise ist als eine solche Attrappe ausgebildet.

Unter einer Attrappe kann hier insbesondere verstanden werden, ein Gegenstand, der nach Form, Gewicht, Haptik und Aussehen Eigenschaften des elektronischen Geräts nachahmt, aber keine Elektronik aufweisen muss. D.h., die Attrappe imitiert zwar das elektronische Gerät weist aber nicht sämtliche Eigenschaften des Geräts (z.B. Notebook oder Smartphone) auf.

Genauer weist die Attrappe ein Gehäuse auf, in dessen Inneren ein Aufnahmebehälter angeordnet ist, der dazu vorgesehen und ausgestaltet ist, einen Brennstoff (insbesondere eine brennbare Flüssigkeit oder eine Brennpaste) aufzunehmen. Ferner ist erfindungsgemäß vorgesehen, dass in dem Gehäuse, und zwar vorzugsweise unterseitig bzw. in einem Gehäuseboden des Gehäuses oder an einer Seitenwand, eine Zündzugangsöffnung ausgestaltet ist. Durch diese Zündzugangsöffnung kann eine Zündflamme, die von einer externen Zündvorrichtung bereitgestellt wird, oder ein entsprechender externer Zündfunken in das Gehäuse eindringen und so einen in dem Aufnahmebehälter bereitgehaltenen Brennstoff entzünden (sofern ein solcher Brennstoff zuvor in den Aufnahmebehälter eingefüllt wurde). Und schließlich ist in dem Gehäuse erfindungsgemäß wenigstens eine Flammaustrittsöffnung ausgebildet, aus welcher die (bei Brand des eingefüllten Brennstoffs erzeugte) Übungsflamme für einen Übenden sichtbar aus dem Inneren des Gehäuses austreten kann.

Die Attrappe ist dabei von Ihrer Form, Ihren Maßen und von Ihrem Gewicht bevorzugt so ausgestaltet, dass sie ähnlich wie das jeweilige elektronische Gerät, welches sie simuliert, manuell aufgenommen / gehandhabt werden kann. In der jeweiligen Gebrauchsstellung (in der auch das zugehörige elektronische Gerät bedient würde), befindet sich dabei die wenigstens eine Flammaustrittsöffnung an der Oberseite der Attrappe, während die Zündzugangsöffnung bevorzugt an einer Seitenfläche oder an einer Unterseite der Attrappe ausgestaltet ist. Die Attrappe kann insbesondere die Form eines Notebooks imitieren und in entsprechender Größe eines Notebooks ausgestaltet sein.

Vorteilhaft an der erfindungsgemäßen Ausgestaltung der Attrappe mit Aufnahmebehälter, Zündzugangsöffnung und Flammaustrittsöffnung ist zunächst, dass eine reale Übungsflamme sicher entzündet werden kann, die auch dann weiter brennt, wenn ein Übender, der die besagte Feuerlöschübung ausführen soll, die bereits brennende Attrappe mit feuerfesten Handschuhen bis zu einer mit Wasser gefüllten Wanne trägt, um die brennende Attrappe dort sicher zu löschen. Genau ein solches Vorgehen wäre nämlich im Falle eines Akkumulator-Brands, beispielsweise innerhalb eines Notebooks, entscheidend, um den Akkumulator-Brand möglichst schnell unter Kontrolle zu bringen und die enorme Hitzeentwicklung aufzufangen.

Ein solches Trainings-Konzept ist völlig neu und unterscheidet sich insbesondere von stationären Brenner-Vorrichtungen, die bisher dazu eingesetzt werden, stationäre Übungsflammen zu erzeugen, die dann typischerweise mit Übungsfeuerlöschern von Übenden bekämpft werden, wobei dabei der korrekte Einsatz des Übungsfeuerlöschers und insbesondere die Wahl des geeigneten Löschmittels eingeübt werden kann. Vorbekannte Brenner-Vorrichtungen sind jedoch nicht als Attrappen von elektronischen mobilen Geräten ausgestaltet, so dass die Handhabung eines solchen brennenden Geräts vom Übenden nicht realistisch mit vorbekannten Brenner-Vorrichtungen eingeübt werden kann. Hierzu sind diese Brenner-Vorrichtungen schlicht zu schwer, zu immobil und sie simulieren nicht den Umgang mit einem brennenden, mobilen, elektronischen Gerät. Insbesondere weisen solche Brenner-Vorrichtungen in der Regel eine Gaszuleitung auf, die brennbares Gas für eine Übungsflamme liefert, nicht aber einen innerhalb eines Gehäuses angeordneten Aufnahmebehälter für einen Brennstoff, wie es die Erfindung vorsieht.

Um solche Übungen noch sicherer zu gestalten, kann die erfindungsgemäße Brandübungsvorrichtung auch eine separate Stand-Halterung umfassen, wie noch genauer erläutert wird. Auf dieser Stand-Halterung kann die Attrappe dann sicher abgelegt und nach Entzünden der Übungsflamme vom Übenden abgenommen werden, um den Umgang mit einem brennenden elektronischen Gerät wirklichkeitsnah zu üben.

Die erfindungsgemäße Vorrichtung lässt sich noch weiterbilden, wie in den Unteransprüchen beschrieben ist:
So sehen bevorzugte Ausgestaltungen vor, dass die Brandschutz-übungsvorrichtung der Form nach und/oder der Größe nach und/oder ihrem Gewicht nach als Attrappe eines Notebooks oder eines Smartphones oder eines Notepads ausgestaltet ist. Denn dadurch wird das Übungs-Szenario noch realistischer.

Das Gehäuse der Attrappe kann idealerweise aus Metall, vorzugsweise aus Edelstahl, ausgestaltet sein, da es dann der Übungsflamme sicher widersteht und somit die Attrappe immer wieder in Brandschutzübungen wiederholt eingesetzt werden kann.

Um ein wiederholtes Inbrandsetzen der Attrappe zu ermöglichen, sieht eine Ausgestaltung vor, dass in dem Gehäuse, vorzugsweise an einer Seitenfläche, eine Einfüllöffnung ausgebildet ist, durch welche hindurch ein Brennstoff in den Aufnahmebehälter eingefüllt werden kann. Dies kann beispielsweise mittels einer Spritze samt daran angeordneter Kanüle geschehen. Auf diese Weise lässt sich nach erfolgter Beübung der verbrauchte Brennstoff leicht wieder in den Aufnahmebehälter einfüllen.

Alternativ zur Verwendung einer Einfüllöffnung im Gehäuse kann das Gehäuse aber auch demontierbar ausgestaltet sein, sodass nach erfolgter Demontage der Aufnahmebehälter zugänglich wird und Brennstoff in diesen nachgefüllt werden kann. Anschließend kann das Gehäuse wieder zusammengesetzt werden (damit die Attrappe realistisch aussieht) und eine neue Feuerlöschübung kann beginnen.

Um die Sicherheit zu erhöhen, sieht eine weitere Ausgestaltung vor, dass eine Flammumlenkvorrichtung, die insbesondere in Form eines Umlenkblechs ausgestaltet sein kann, im Bereich der zuvor beschriebenen Zündzugangsöffnung im Inneren des Gehäuses ausgestaltet/angeordnet ist. Hierbei ist es bevorzugt, wenn die Flammumlenkvorrichtung oberhalb der Zündzugangsöffnung angeordnet ist. Denn in diesem Fall kann eine Zündflamme, die von unten in das Gehäuse eindringt, effektiv zur Seite in Richtung auf den Aufnahmebehälter umgelenkt werden. Eine solche Zündflamme kann insbesondere von einer separaten Brandschutzübungsvorrichtung bereitgestellt werden, sofern diese eine Brennervorrichtung zur Erzeugung einer Flamme aufweist. Diese separate Brandschutzübungsvorrichtung kann insbesondere durch ein Exemplar aus der Produkt-Serie "AISCO Firetrainer" gebildet sein. In diesem Fall basiert die Zündflamme auf brennbarem Gas und muss im Regelfall nur einige wenige Sekunden bis Sekundenbruchteile brennen, um die Übungsflamme innerhalb der Attrappe zu entzünden.

Im allereinfachsten Fall kann die zum Zünden der Übungsflamme innerhalb der Attrappe notwendige Zündflamme aber auch durch eine brennende Lunte bereitgestellt werden, die **z.B.** von einem Übungsleiter in die Zündzugangsöffnung kurzzeitig eingeführt wird, um den Brennstoff im Aufnahmebehälter zu entzünden. In einem solchen Fall benötigt man für eine wirkungsvolle Übung lediglich die Attrappe samt in deren Aufnahmebehälter bereits eingefüllter Brandpaste, eine Lunte samt Zündhölzern, sowie ein Wasserbad, in welche die brennende Attrappe eingetaucht werden soll.

Die Flammumlenkvorrichtung kann somit so ausgestaltet sein, dass sie eine von unten oder von der Seite durch die Zündzugangsöffnung in das Gehäuse eintretende Zündflamme (oder Zündfunken) in Richtung auf den Aufnahmebehälter umlenkt, damit der darin bereitgehaltene Brennstoff sicher von der Zündflamme erreicht und von dieser entzündet werden kann. Bevorzugt ist die Flammumlenkvorrichtung dabei separat von einer äußeren Gehäusehülle der Attrappe im Innern des Gehäuses ausgestaltet.

Der Aufnahmebehälter kann bevorzugt in Form einer (zumindest teilweise nach oben offenen) Aufnahmewanne ausgestaltet sein. Diese Aufnahmewanne kann dann mit der wenigstens einen Flammaustrittsöffnung kommunizieren (hierzu genügt im Wesentlichen ein Weg, auf dem sich die Übungsflamme Ihren Weg nach außen suchen kann), sodass bei Entzünden eines Brennstoffs, der in der Aufnahmewanne eingefüllt ist, die gewünschte Übungsflamme durch die wenigstens eine Flammaustrittsöffnung nach außen austreten kann. Hierbei ist es bevorzugt, wenn die Zündzugangsöffnung in einem Gehäuseboden des Gehäuses der Attrappe ausgestaltet ist, und zwar vorzugsweise direkt benachbart zu der Aufnahmewanne. Denn so kann der Brennstoff sicher mit der Zündflamme entzündet werden.

Eine besonders bevorzugte Ausgestaltung, die sich insbesondere zum realistischen Üben von Brand-Szenarien durch Personal von Fluggesellschaften eignet, sieht vor, dass die Attrappe ein Notebook simuliert und hierzu das Gehäuse einen quaderförmigen Grundkörper mit einer Tastatur-Attrappe ausbildet, wobei mehrere Flammaustrittsöffnungen in der Tastatur-Attrappe ausgestaltet sind. Ferner bildet das Gehäuse auch eine Bildschirm-Attrappe aus, die mit dem Grundkörper verbunden ist, und zwar vorzugsweise gelenkig.

Wie erwähnt, kann eine erfindungsgemäße Brandschutzübungsvorrichtung auch eine separate, passend zu Attrappe ausgestaltete Stand-Halterung umfassen. Auf der Stand-Halterung kann somit die Attrappe sicher abgelegt werden (ohne dass Gefahr besteht, dass die Attrappe beispielsweise von der Stand-Halterung herunterrutscht, während die Übungsflamme brennt). Hierbei kann auch vorgesehen sein, dass die Stand-Halterung eine eigene Zündvorrichtung aufweist, mit der die erwähnte Zündflamme oder der Zündfunken erzeugt werden kann, mit dem dann der Brennstoff entzündet wird.

Die Stand-Halterung kann aber auch zum Ankuppeln an eine stationäre Brennervorrichtung (beispielsweise auf Basis eines Gas-Brenners) ausgestaltet sein. In diesem Fall kann mit der stationären Brennervorrichtung eine Zündflamme oder ein Zündfunken erzeugt werden, der dann durch die Stand-Halterung hindurch in die besagte Zündzugangsöffnung im Gehäuse der Attrappe eintreten kann, sofern die Attrappe auf der Stand-Halterung ordnungsgemäß abgelegt ist. Mit anderen Worten sind die Zündvorrichtung und/oder die Brennervorrichtung samt angekuppelter Stand-Vorrichtung somit bevorzugt so ausgestaltet, dass die Zündflamme / der Zündfunken im Bereich der Zündzugangsöffnung der Attrappe erzeugt wird, wenn die Attrappe von der Stand-Halterung gehalten wird, sodass ein in den Aufnahmebehälter eingefüllter Brennstoff zuverlässig entzündet werden kann.

Zur Lösung der Aufgabe wird auch ein Verfahren vorgeschlagen, mit dem sich eine realistische Feuerlöschübung vorbereiten lässt. Diese Feuerlöschübung soll dabei dem Üben des Löschens eines Akkumulator-Brands dienen, der innerhalb eines mobilen elektronischen Geräts ausgebrochen ist. Bei diesem Verfahren wird eine Brandschutzübungsvorrichtung in Form einer Attrappe des besagten elektronischen Geräts eingesetzt, wobei diese Attrappe bevorzugt wie zuvor beschrieben oder gemäß einem der auf eine Brandschutz-Übungsvorrichtung ausgerichteten Ansprüche ausgestaltet ist. Um die Feuerlöschübung vorzubereiten, wird zunächst ein Brennstoff, insbesondere durch eine Einfüllöffnung, in einen Aufnahmebehälter eingebracht, der im Inneren eines Gehäuses der Attrappe ausgestaltet ist. Anschließend wird der so in der Attrappe bereitgehaltene Brennstoff durch eine im Gehäuse ausgestaltete Zündzugangsöffnung hindurch mittels einer externen Zündflamme oder eines externen Zündfunkens entzündet. Anschließend kann der Übende die brennende Attrappe (idealerweise mit feuerfesten Handschuhen, um Verletzungen zu vermeiden) mit seinen Händen ergreifen und umhertragen, während die von dem Brennstoff genährte Übungsflamme aus wenigstens einer im Gehäuse der Attrappe ausgebildeten Flammaustrittsöffnung aus der Attrappe austritt.

Sobald die Übende / der Übende die brennende Attrappe auf eigenen Händen hält, kann der realistische Teil der Feuerlöschübung beginnen, in welcher der Übende versucht, die Übungsflamme zu löschen, vorzugweise indem er die gesamte Attrappe samt der Übungsflamme in einem Wasserbad versenkt. So lässt sich das korrekte Verhalten in hoch gefährlichen Brandszenarien (wie etwa ein Akkumulator-Brand in einem Notebook, welcher innerhalb einer Flugzeugkabine auftritt) gezielt beüben.

Beim Entzünden des Brennstoffs, der im Aufnahmebehälter vorgehalten wird, kann die Attrappe, wie zuvor erläutert, auf einer separaten Stand-Halterung abnehmbar ruhen, sodass ein Übender/eine Übende die Attrappe bei bereits brennender Übungsflamme von der Stand-Halterung (sicher) abnehmen kann. Hierbei kann die Zündflamme/der Zündfunken insbesondere von einer Zündvorrichtung erzeugt werden, die als Teil der Stand-Halterung ausgestaltet ist. Besonders bevorzugt ist es dabei, wenn die Zündvorrichtung mittels einer Fernbedienung aus der Ferne (beispielsweise von einem Feuerlöschübungsleiter) gestartet wird, um die Zündflamme/den Zündfunken zu erzeugen und so den Brennstoff in der Attrappe zu entzünden.

Aus einem anderen Blickwinkel betrachtet schlägt die Erfindung somit vor, einen Brennstoff, insbesondere in Form einer brennbaren Flüssigkeit oder einer Brennpaste, in einen Aufnahmebehälter einzubringen, der innerhalb eines Gehäuses eine Attrappe ausgebildet ist, wobei diese Attrappe die Form und die Maße eines mobilen elektronischen Geräts aufweist und daher ein solches mobiles elektronisches Gerät simuliert. Der Brennstoff soll dabei mittels einer externen Zündflamme oder mittels eines externen Zündfunkens entzündet werden, sodass eine reale Übungsflamme aus wenigstens einer Flammaustrittsöffnung aus dem Gehäuse der Attrappe austritt. Trägt ein Übender diese Attrappe mit seinen Händen umher, so wird die Übungsflamme weiterhin durch den im Aufnahmebehälter der Attrappe bereitgehaltenen Brennstoff genährt, sodass die Übungsflamme über einen ausreichend langen Zeitraum (dies können 30-180 Sekunden sein) für die Übung aufrechterhalten werden kann. Dabei wird der Übende insbesondere nicht durch Zuleitungsschläuche oder dergleichen gestört, die den Brennstoff zuführen, sondern vielmehr ist der Brennstoff lediglich im Inneren des Gehäuses der Attrappe in ausreichender Menge vorgehalten, um einen Brand der Übungsflamme über einen geeignet langen Zeitraum von typischerweise 30-180 Sekunden zu ermöglichen.

Die Erfindung verwendet demnach wie erwähnt eine Attrappe eines elektronischen Geräts. Die Attrappe weist dabei Flammaustrittsöffnungen auf, welche in einer Art Bedienoberfläche der Attrappe ausgestaltet sind und aus denen eine Übungs-feuerflamme austreten kann. Im Innern der Attrappe ist ein Aufnahmeraum, im Falle der illustrierten Notebook-Attrappe in Form eines Aufnahmebeckens, ausgestaltet, der dazu vorgesehen ist, eine brennbare, viskose Paste aufzunehmen, die rückseitig durch eine Öffnung in die Attrappe eingeführt werden kann.

Am Boden der Attrappe befindet sich ein zentral angeordnetes Loch (Zündzugangsöffnung), durch welches hindurch eine Zündflamme eingebracht werden kann. Beim Üben kann die Attrappe auf einer separaten Ablage abgelegt werden, die Teil einer Zündvorrichtung ist. Diese Zündvorrichtung kann beispielsweise eine auf Gas basierende und elektrisch gezündete Zündflamme zur Verfügung stellen, die dann durch die zentrale Öffnung von unten in das Gehäuse der Attrappe eindringt. Damit diese Zündflamme dann die Brennpaste im Inneren der Attrappe erreicht, ist ein Ablenkblech im Innern der Attrappe ausgestaltet, welches die von unten in vertikaler Richtung eintretende Übungsflamme in Richtung der Horizontalen ablenkt, sodass diese Übungsflamme die in der seitlichen Öffnung angeordnete Brennpaste auch tatsächlich erreicht und diese entzündet.

Sobald die Brennpaste brennt, treten gelbe Flammen aus den Flammaustrittsöffnungen aus. Zu diesem Zweck (zur Färbung der Flamme) kann auch ein chemischer Zusatz in die Brennpaste eingebracht sein, um so auf realistische Weise einen Feststoffbrand (in der Realität werden insbesondere die Kunststoffe, Kleber und elektronischen Bauteile des elektronischen Geräts in Brand geraten) zu simulieren.

Die Erfindung wird nun anhand eines konkreten Ausführungsbeispiels näher beschrieben, ist aber natürlich nicht auf dieses eine Ausführungsbeispiel beschränkt.

Es zeigt:
- Figur 1: eine perspektivische Ansicht auf eine Attrappe, die auf einer zugehörigen Stand-Halterung abgestellt ist, wobei diese beiden Komponenten zusammen eine erfindungsgemäße Brandschutz-übungsvorrichtung bilden,
- Figur 2: eine seitliche Schnittansicht durch die Brandschutzübungsvorrichtung der Figur 1,
- Figur 3: die Brandschutzübungsvorrichtung der Figur 1 in einer Seitenansicht von links,
- Figur 4: die Brandschutzübungsvorrichtung der Figur 1 in einer Ansicht von frontal vorne und schließlich

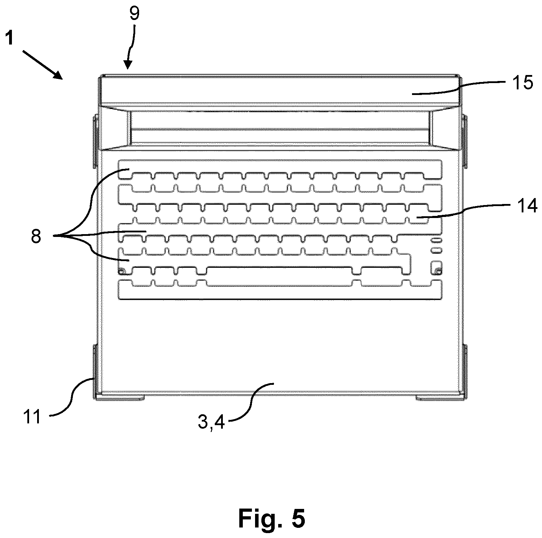

- Figur 5: die Brandschutzübungsvorrichtung der Figur 1 in einer Ansicht von oben.

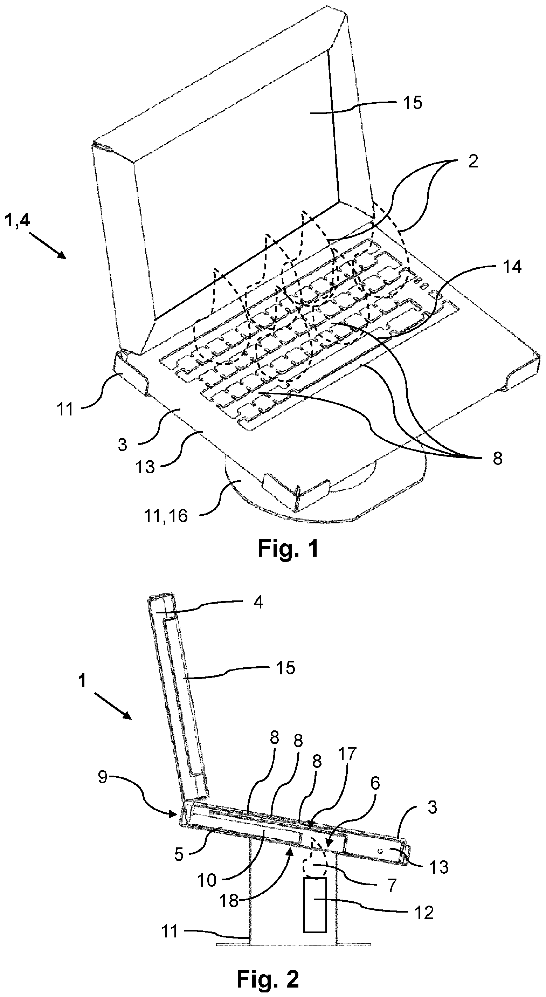

Die Figur 1 zeigt eine im Ganzen mit 1 bezeichnete Brandschutzübungsvorrichtung, welche eine Attrappe 4 in der Formgebung eines Notebooks und eine zugehörige Stand-Halterung 11 umfasst. Die Stand-Halterung 11 bietet erkennbar eine Ablagefläche, auf welcher die Notebook-Attrappe 4 sicher abgestellt werden kann. Die Stand-Halterung 11 ruht dabei auf dem Boden mittels eines Standfußes 16.

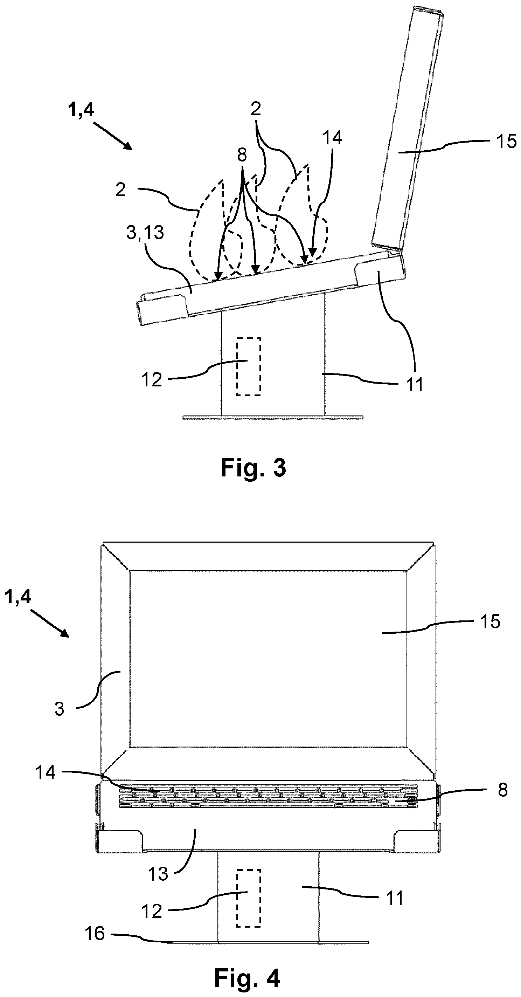

Wie man gut anhand der beiden Seitenansichten der Figur 2 und der Figur 3 aber auch in Figur 4 erkennt, bildet ein Gehäuse 3 der Attrappe 4 sowohl eine Tastatur-Attrappe 14 als auch eine Bildschirm-Attrappe 15 aus, sodass die Attrappe 4 vom Aussehen aber auch von der Haptik her einem Notebook stark ähnelt. In der Oberseite des Gehäuses 3, im Bereich der Tastatur-Attrappe 14, sind mehrere Flammaustrittsöffnungen 8 in Form von Schlitzen ausgestaltet, durch welche hindurch eine Übungsflamme 2 austreten soll, um ein realistisches BrandSzenario, nämlich einen Akkumulator-Brand im Inneren des Notebooks, simulieren zu können. Zu diesem Zweck ist im Inneren des Gehäuses 3 ein Aufnahmebehälter 5 in Form einer Aufnahmewanne ausgestaltet, wobei eine Brennpaste 10 durch eine an der Rückseite des Gehäuses 3 ausgestaltete Einfüllöffnung 9 hindurch in den Aufnahmebehälter 5 eingebracht wurde.

Ist die Attrappe 4 in dieser Weise vorbereitet und auf der Stand-Halterung 11 abgestellt, so kann mittels einer Zündvorrichtung 12, die in der Stand-Halterung 11 ausgestaltet ist und mittels einer Fernbedienung aus der Ferne bedienbar ist, eine Zündflamme 7 erzeugt werden, wie in Figur 2 illustriert. Die Zündflamme 7 steigt dabei von der Zündvorrichtung 12 ausgehend nach oben und trifft dort auf den Gehäuseboden 18 des Gehäuses 3 der Attrappe **4.** In diesem Bereich des Gehäusebodens 18 ist eine Zündzugangsöffnung 6 ausgestaltet, durch welche hindurch die Zündflamme 7 in das Innere des Gehäuses 3 eintreten kann. Damit die Zündflamme 7 den Brennstoff 10 im Aufnahmebehälter 5 sicher entzündet, ist in der in Figur 2 gezeigten Situation oberhalb der Zündflamme 7 und im Inneren des Gehäuses 3 eine Flammumlenkvorrichtung 17 in Form eines separaten Umlenkblechs ausgestaltet. Dieses separat vom Gehäuse 3 ausgestaltete Blech leitet die von unten aufsteigende Zündflamme 7 in der Figur 2 nach links in Richtung auf den Aufnahmebehälter 5 um, sodass die Zündflamme 7 sicher in Kontakt mit dem darin befindlichen Brennstoff 10 gerät und diesen zuverlässig entzündet.

Sobald die Übungsflamme 2, wie in Figur 1 illustriert, aus den mehreren Flammaustrittsöffnungen 8 austritt, kann der Übende mit der eigentlichen Feuerlöschübung beginnen: Hierzu nimmt er zunächst die bereits brennende Attrappe 4 mit feuerfesten Handschuhen von der Stand-Halterung 11 ab und trägt die immer noch weiter brennende Attrappe 4 bis zu einem Wasserbad, um anschließend die gesamte Attrappe 4 in dem Wasserbad zu versenken und damit schnell und effizient den Übungsbrand zum Erliegen zu bringen. Die realitätsnahe Ausgestaltung der Attrappe 4 in Bezug auf Form, Gewicht und Größe stellt dabei sicher, dass der Übende den Umgang mit der brennenden Attrappe 4 üben kann, so als wäre ein tatsächliches elektronisches Gerät, nämlich das simulierte Notebook, in Brand geraten. Hierdurch lässt sich die Übung besonders realitätsnah gestalten, sodass der Übende insbesondere lernen kann, wie er beim Löschen eigene Verletzungen durch die aus der Attrappe 4 austretenden Übungsflammen 2 sicher vermeiden kann.

Zusammenfassend wird zur Verbesserung der Möglichkeiten für realistische Brandschutzübungen eine neuartige Vorrichtung vorgeschlagen, die in Form einer Attrappe 4 eines mobilen elektronischen Geräts ausgestaltet ist und dabei in der Lage ist, eine autonom brennende Übungsflamme 2 über eine Übungszeitraum zu unterhalten, und zwar insbesondere während ein Übender die Attrappe 4 im Raum umher trägt, um das Löschen eines Brands zu üben, so als sei das simulierte elektronische Gerät aufgrund eines Akkumulator-Brands im Innern in Brand geraten (vergleiche Figur 1).

### Bezugszeichenliste

- 1: Brandschutzübungsvorrichtung
- 2: Übungsflamme
- 3: Gehäuse
- 4: Attrappe (ausgebildet durch 1 bzw. 3)
- 5: Aufnahmebehälter (angeordnet in und/oder ausgebildet durch 3)
- 6: Zündzugangsöffnung
- 7: Zündflamme / Zündfunken
- 8: Flammaustrittsöffnung
- 9: Einfüllöffnung (ausgestaltet in 3, zum Einbringen von 9 in 5)
- 10: Brennstoff (insbesondere Brennpaste oder brennbare Flüssigkeit)
- 11: Stand-Halterung (zum Halten von 1 während des Entzündens von 2; zum Beispiel in Form eines Podests)
- 12: Zündvorrichtung (kann Teil von 11 sein; zum Erzeugen von 7)
- 13: Grundkörper
- 14: Tastatur-Attrappe
- 15: Bildschirm-Attrappe
- 16: Standfuß (von 11)
- 17: Flammumlenkvorrichtung (insbesondere ausgestaltet als Flammumlenkblech)
- 18: Gehäuseboden (von 3)

## Patentansprüche

1. **Wiederverwendbare Brandschutzübungsvorrichtung (1),** eingerichtet zum Erzeugen einer realen Übungsflamme (2), die einen Akkumulator-Brand innerhalb eines mobilen elektronischen Geräts simuliert, im Rahmen einer Feuerlöschübung, wobei
- die Brandschutzübungsvorrichtung (1) eine Attrappe (4) des mobilen elektronischen Geräts umfasst und die Attrappe (4) ein Gehäuse (3) aufweist, in dessen Inneren ein Aufnahmebehälter (5) zum Aufnehmen eines Brennstoffs (10) angeordnet ist, und wobei
- in dem Gehäuse (3), vorzugsweise unterseitig / in einem Gehäuseboden (18), eine Zündzugangsöffnung (6) ausgestaltet ist, durch die eine externe Zündflamme (7) oder ein externer Zündfunken (7) den im Aufnahmebehälter (5) bereit gehaltenen Brennstoff (10) entzünden kann, sowie, vorzugsweise oberseitig, wenigstens eine Flammaustrittsöffnung (8), aus der die bei Brand des Brennstoffs erzeugte Übungsflamme (2) aus dem Inneren des Gehäuses (3) austreten kann.

2. Brandschutzübungsvorrichtung (1) nach Anspruch 1,
- wobei die Brandschutzübungsvorrichtung (1) der Form nach und/oder der Größe nach als Attrappe (4)
- eines Notebooks oder
- eines Smartphones oder
- eines Notepads
ausgestaltet ist.

3. Brandschutzübungsvorrichtung (1) nach einem der vorhergehenden Ansprüche, wobei das Gehäuse (3) aus Metall, vorzugsweise aus Edelstahl, ausgestaltet ist, sodass es der Übungsflamme (2) widersteht,
- insbesondere und die Attrappe (4) somit wiederholt in Brand gesetzt werden kann.

4. Brandschutzübungsvorrichtung (1) nach einem der vorhergehenden Ansprüche, wobei in dem Gehäuse (3), vorzugsweise an einer Seitenfläche, eine Einfüllöffnung (9) ausgebildet ist, durch welche hindurch ein Brennstoff (10) in den Aufnahmebehälter (5) eingefüllt werden kann.

5. Brandschutzübungsvorrichtung (1) nach einem der vorhergehenden Ansprüche, wobei eine Flammumlenkvorrichtung (17), insbesondere in Form eines Umlenkblechs, im Bereich, insbesondere oberhalb von, der Zündzugangsöffnung (6) im Inneren des Gehäuses (3) ausgestaltet ist.

6. Brandschutzübungsvorrichtung (1) nach einem der vorhergehenden Ansprüche, wobei der Aufnahmebehälter (5) in Form einer Aufnahmewanne ausgestaltet ist, welche Aufnahmewanne mit der wenigstens einen Flammaustrittsöffnung (8) kommuniziert, sodass bei Entzünden eines Brennstoffs (10) in der Aufnahmewanne die gewünschte Übungsflamme (2) durch die wenigstens eine Flammaustrittsöffnung (8) nach außen austreten kann,
- vorzugsweise wobei die Zündzugangsöffnung (6) in einem Gehäuseboden (18) des Gehäuses (3) der Attrappe (4), vorzugsweise direkt benachbart zu der Aufnahmewanne, ausgestaltet ist.

7. Brandschutzübungsvorrichtung (1) nach einem der vorhergehenden Ansprüche, wobei die Attrappe (4) ein Notebook simuliert und hierzu das Gehäuse (3) einen quaderförmigen Grundkörper (13) mit einer Tastatur-Attrappe (14) ausbildet, wobei mehrere Flammaustrittsöffnungen (8) in der Tastatur-Attrappe (14) ausgestaltet sind, sowie eine, vorzugsweise gelenkig, mit dem Grundkörper (13) verbundene Bildschirm-Attrappe (15).

8. Brandschutzübungsvorrichtung (1) nach einem der vorhergehenden Ansprüche, wobei die Brandschutzübungsvorrichtung (1) eine separate, passend zur Attrappe (4) ausgestaltete Stand-Halterung (11) umfasst, auf der die Attrappe (4) sicher abgelegt werden kann,
- vorzugsweise wobei die Stand-Halterung (11)
- eine Zündvorrichtung (12) zum Erzeugen einer Zündflamme (7) oder eines Zündfunkens (7) aufweist oder
- zum Ankuppeln, insbesondere mittels einer Bajonett-Kupplung, an eine stationäre Brennervorrichtung ausgestaltet ist, mit welcher Brennervorrichtung eine Zündflamme (7) oder ein Zündfunken (7) erzeugbar ist.

9. **Verfahren zum Vorbereiten einer realistischen Feuerlöschübung,** die dem Üben des Löschens eines Akkumulator-Brands innerhalb eines mobilen elektronischen Geräts dient, wobei
- eine Attrappe (4) eines elektronischen Geräts, vorzugsweise und ausgestaltet als Brandschutzübungsvorrichtung (1) gemäß einem der vorhergehenden Ansprüche 1 bis 7, bei der Feuerlöschübung zum Einsatz kommt,
- ein Brennstoff, insbesondere in Form einer brennbaren Flüssigkeit oder einer Brennpaste, in einen Aufnahmebehälter (5), der im Inneren eines Gehäuses (3) der Attrappe (4) ausgestaltet ist, eingebracht wird,
- der so in der Attrappe (4) bereit gehaltene Brennstoff (10) durch eine im Gehäuse (3) ausgestaltete Zündzugangsöffnung (6) hindurch mittels einer externen Zündflamme (7) oder mittels eines externen Zündfunkens (7) entzündet wird und
- die brennende Attrappe (4) vom Übenden umher getragen wird, während eine von dem Brennstoff (10) genährte Übungsflamme (2) aus wenigstens einer im Gehäuse (3) ausgebildeten Flammaustrittsöffnung (8) aus der Attrappe (4) austritt.

10. Verfahren gemäß dem vorherigen Anspruch, wobei die Attrappe (4) beim Entzünden des Brennstoffs auf einer separaten Stand-Halterung (11) abnehmbar ruht, sodass ein Übender / eine Übende die Attrappe (4) bei bereits brennender Übungsflamme (2) von der Stand-Halterung (11) abnehmen kann,
- insbesondere wobei die Zündflamme (7) / der Zündfunken (7) von einer Zündvorrichtung (12) erzeugt wird, die als Teil der Stand-Halterung (11) ausgestaltet ist,
- besonders bevorzugt wobei die Zündvorrichtung (12) mittels einer Fernbedienung aus der Ferne gestartet wird, um die Zündflamme (7) / den Zündfunken (7) zu erzeugen und so den Brennstoff (10) in der Attrappe (4) zu entzünden.

11. **Verwendung eines Brennstoffs (10) zur Simulation eines Akkumulator-Brands,**
- wobei der Brennstoff (10), insbesondere in Form einer brennbaren Flüssigkeit oder einer Brennpaste, in einen Aufnahmebehälter (5) eingebracht wird, der innerhalb eines Gehäuses (3) einer Attrappe (4) ausgebildet ist, die ein mobiles elektronischen Gerät simuliert, und
- wobei der Brennstoff (10) mittels einer externen Zündflamme (7) oder mittels eines externen Zündfunkens (7) entzündet wird, sodass eine reale Übungsflamme (2) aus wenigstens einer Flammaustrittsöffnung (8) aus dem Gehäuse (3) der Attrappe (4) austritt.
